# EUROPÄISCHE PATENTSCHRIFT

(11) **EP 1 612 065 B1**
(45) Veröffentlichungstag und Bekanntmachung des Hinweises auf die Patenterteilung: **01.08.2007**
(21) Anmeldenummer: 05011806.6
(22) Anmeldetag: 01.06.2005
(51) Int. Cl.: B60D 1/60

(54) **Schutzkappe**
Hitchball cover
Protection de boule d'attelage

(30) Priorität: 03.07.2004 DE 202004010452 U
(43) Veröffentlichungstag der Anmeldung: 04.01.2006
(73) Patentinhaber: WESTFALIA - Automotive GmbH, 33378 Rheda-Wiedenbrück (DE)
(72) Erfinder: Domke, Friedrich, 33442 Herzebrock-Clarholz (DE)
(74) Vertreter: Grosse, Wolf-Dietrich Rüdiger

(56) Entgegenhaltungen:
- EP-A- 0 274 160
- DE-A1- 3 623 426
- DE-U1- 9 214 195
- SU-A1- 759 343

## Beschreibung

Die Erfindung betrifft eine Schutzkappe für eine Kupplungskugel, die an einer Kugelstange einer Anhängevorrichtung angeordnet ist.

Solche Schutzkappen sind aus EP 0 274 160 A bekannt.

Im Stand der Technik sind Anhängevorrichtungen für Kraftfahrzeuge in mannigfacher Ausführungsform bekannt, insbesondere solche, bei denen die Kugelstange beispielsweise axial verschiebbar und/oder radial verschwenkbar am Fahrzeug angeordnet ist, wobei die Betätigung der Kugelstange motorisch oder von Hand erfolgt.

Zum Schutz der Kupplungskugel in ihrer Ruhelage, also dann, wenn die Kugelstange in eine Außerbetriebslage geschwenkt wurde, ist es bekannt, beispielsweise eine zylindrische Kunststoffkappe oder auch einfach einen entsprechend aufgeschnittenen Tennisball über die Kupplungskugel zu stülpen.

Bei schwenkbaren Kugelstangen steht nur ein begrenzter Freiraum für die Schwenkbewegung in die Außerbetriebslage hinter den Stoßfänger eines Fahrzeuges, und zurück, zur Verfügung, so dass die vorstehend erwähnten Kunststoffkappen bzw. Tennisbälle den Bewegungsraum zusätzlich beeinträchtigen, da ihre Berandungen weit von der Kugelmitte entfernt sind. Des weiteren können sich die zylindrischen Kappen auf der Kupplungskugel ausladend verlagern bzw. - schieben und somit den erforderlichen Schwenkraum der Kugelstange vergrößern.

Der Erfindung liegt daher die Aufgabe zugrunde, eine Schutzkappe für Kupplungskugeln ohne die eingangs erwähnten Nachteile zu schaffen.

Diese Aufgabe wird erfindungsgemäß dadurch gelöst, dass die Schutzkappe aus zwei der Kontur der Kupplungskugel angepassten Halbschalen besteht, die im oberen, der Kugelstange gegenüberliegenden Bereich über ein aufspreizbares Gelenk miteinander verbunden sind. In ihrer die Kupplungskugeln einhausenden, geschlossenen Gebrauchslage liegen die jeweiligen Stirnflächen der beiden Halbschalen, die die Kupplungskugel formschlüssig vollständig umgreifen und diese dabei so eng wie überhaupt möglich einhausen, einander unmittelbar an.

Ein Vorschlag der Erfindung sieht vor, dass die Halbschalen an ihren freien Enden mit Verriegelungsmitteln ausgebildet sind, die eine enge Verschlusslage der Halbschalen unterstützen.

Am unteren Ende der Halbschalen ist vorteilhaft ein umlaufender, zylindrischer Kragen angeformt, der die unterhalb der Kupplungskugel beginnende, im Vergleich zu der Kupplungskugel einen geringeren Durchmesser aufweisenden Kugelstange umfaßt und somit verhindert, dass die Schutzkappe im geschlossenen Zustand von der Kupplungskugel abgezogen werden bzw. verloren gehen kann. Alternativ können Radialkragen vorgesehen werden, die die Kupplungskugel hinter- bzw. untergreifen.

Eine Ausgestaltung der Erfindung sieht vor, dass das Gelenk der Schutzkappe als Filmscharnier ausgebildet ist. Zum Aufsetzen der Kugelschutzkappe auf die Kupplungskugel lassen sich die beiden über das Filmscharnier mit einer der Aufspreizung entgegenwirkenden Vorspannung verbundenen, damit schon von vornherein auseinanderklaffenden Halbschalen leicht noch weiter voneinander abspreizen. Danach können die Halbschalen dann in einfacher Weise zu der die Kupplungskugel wie eine Haut umschließenden runden Formkontur zusammengefügt werden.

Um ein selbsttätiges Öffnen der Halbschalen nach dem Aufstecken auf die Kupplungskugel zu verhindern und deren Formschlusslage zu sichern, können die Verriegelungsmittel nach einem Vorschlag der Erfindung der Art sein, dass eine Halbschale im unteren Kragenbereich an ihren jeweils äußeren Endpunkten einerseits mit einer Rastausnehmung und andererseits mit einer Rastnase ausgebildet ist, denen im Kragenbereich der gegenüberliegenden Halbschale eine entsprechende Rastnase und eine Rastausnehmung zugeordnet sind.

Zum Abnehmen der Kugelschutzkappe ist erfindungsgemäß vorgesehen, dass im umlaufenden Kragen Eingriffsnuten zum Öffnen der Halbschalen angeordnet sind. Durch Zug mit den Händen an den Eingriffsnuten werden die Halbschalen aus ihrem Rasteingriff gelöst und schon allein aufgrund der Vorspannung des Filmscharniers auseinander gespreizt, so dass sich die Kugelschutzkappe einfach von der Kupplungskugel entfernen lässt.

Eine vorzugsweise Ausführung der Gelenkverbindung sieht vor, dass das Gelenk aus Scharnieraugen der Halbschalen und eine diese miteinander verbindende Steckachse besteht. Die über die Steckachse frei schwenkbaren Halbschalen werden vorteilhaft im oberen Bereich über ein elastisches Element, beispielsweise eine Ringfeder oder ein O-förmiges Gummiband, zusammengezogen bzw. - gehalten, womit sich eine solche Vorspannung erreichen lässt, die Verriegelungsmittel an den freien Enden der Halbschalen entbehrlich machen kann.

Zum Aufsetzen der Schutzkappe wird diese einfach mit ihrem umlaufenden, einen geringeren Durchmesser aufweisenden Kragen bzw. mit den Radialkragen auf die Kupplungskugel gegen die Vorspannkraft gedrückt, wobei die Halbschalen dann beim Abgleiten nach unten von der Kugel gespreizt und nach dem vollständigen Aufdrücken durch das elastische Element wieder in die kugelförmige, die Kupplungskugel formschlüssig eng umgreifende Gebrauchslage zusammengezogen werden.

Um die Schutzkappe von der Kupplungskugel abzuziehen, wird diese über ein vorzugsweise am Scharniergelenk angebrachtes Griffelement nach oben gezogen, wobei die Halbschalen nunmehr durch den größeren Kugeldurchmesser der Kupplungskugel nach außen hin gespreizt und nach dem vollständigen Entfernen von der Kugel über das elastische Element bzw. die Vorspannkraft wieder zusammengezogen werden.

Weitere Merkmale und Einzelheiten der Erfindung ergeben sich aus den Ansprüchen und der nachfolgenden Beschreibung von in den Zeichnungen dargestellten Ausführungsbeispielen der Erfindung. Es zeigen:
- Fig. 1: in einer perspektivischen Ansicht eine Kupplungskugel einer Anhängevorrichtung mit einer in gespreizter Stellung dargestellten Schutzkappe;
- Fig. 2: im Längsschnitt die auf die Kupplungskugel aufgesteckte Schutzkappe;
- Fig. 3: die Schutzkappe gemäß Fig. 2 in einem Querschnitt im Bereich eines Kappenkragens;
- Fig. 4: eine andere Ausführungsform einer in gespreizter Lage dargestellten Schutzkappe;
- Fig. 5: eine weitre Ausführung einer Schutzkappe, in aufgespreizter Stellung vor dem Aufstecken auf eine Kupplungskugel dargestellt; und
- Fig. 6: die Schutzkappe nach Fig. 5 als Explosionsdarstellung.

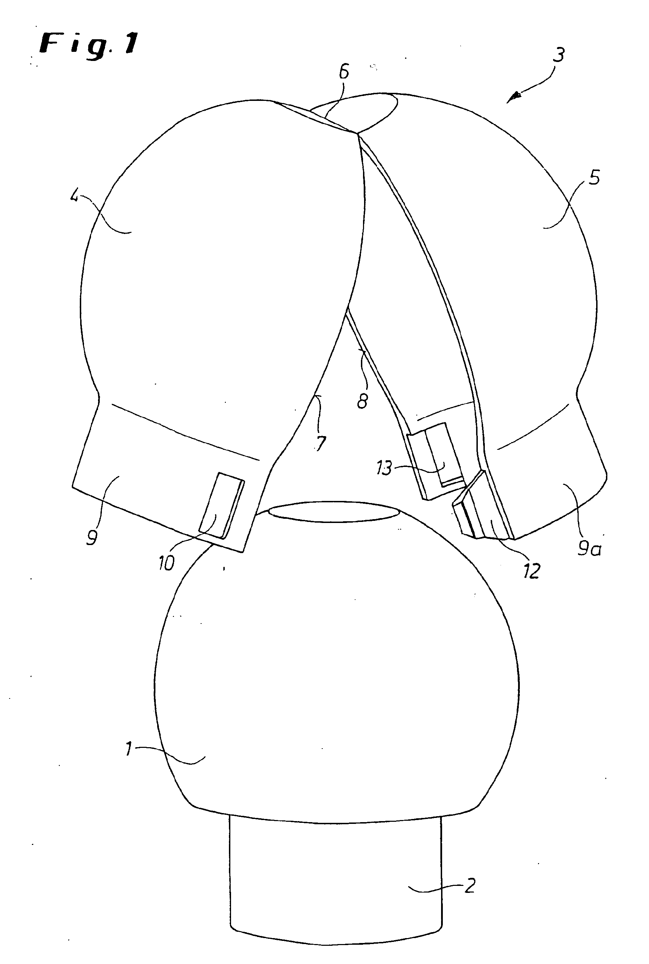

Eine in Fig. 1 gezeigte Kupplungskugel 1 wird von einer Kugelstange 2 einer hier nicht näher dargestellten Anhängevorrichtung für Kraftfahrzeuge getragen. Zur Abdeckung der Kupplungskugel 1 ist eine Schutzkappe 3 vorgesehen, die der Kupplungskugelkontur angepasst ist und aus zwei Halbschalen 4, 5 besteht. Die beiden Halbschalen 4, 5 sind über ein Filmscharnier 6 mit Vorspannung gelenkig miteinander verbunden, so dass die Halbschalen 4, 5 in der Ruhelage voneinander abgespreizt sind.

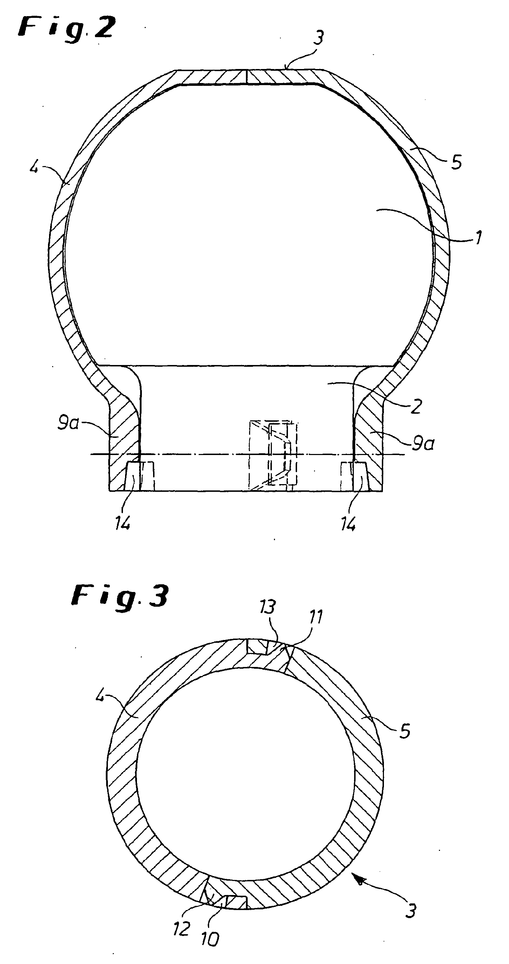

Nach dem Aufsetzen der Schutzkappe 3 auf die Kupplungskugel 1 werden die Halbschalen 4, 5 dann zu der die Kupplungskugel 1 eng einhausenden, runden Formkontur zusammengefügt, wobei die Stirnflächen 7, 8 der Halbschalen 4, 5 bündig aneinander liegen (vgl. hierzu Fig. 2 und 3).

Am unteren Ende der Schutzkappe 3 ist ein in deren geschlossener Betriebslage die Kupplungskugel 1 vor Verschmutzung, Rostbefall, Beschädigung und dgl. schützender, umlaufender zylindrischer Kragen 9a angeformt, der den an die Kupplungskugel 1 angrenzenden, oberen Teil der Kugelstange 2 formschlüssig umgreift.

Um ein Öffnen der vorgespannten Halbschalen 4, 5 nach dem Aufstecken und Zusammenfügen zu verhindern, ist bei der Ausführung nach den Figuren 1 bis 4 die Halbschale 4 im Bereich der äußeren Endpunkte des Kragens 9a einerseits mit einer Rastausnehmung 10 und andererseits einer Rastnase 11 ausgebildet, denen im Kragen 9a der anderen Halbschale 5 eine entsprechende Rastnase 12 und eine Rastausnehmung 13 zugeordnet ist (vgl. hierzu Fig. 3).

Zum Abnehmen der Schutzkappe 3 von der Kupplungskugel 1 sind im umlaufenden Kragen 9a Eingriffsnuten 14 vorgesehen, über die sich die Halbschalen 4, 5 aus ihrem Rasteingriff lösen lassen. Begünstigt durch die Vorspannung spreizen sich die Halbschalen 4, 5 dann voneinander ab, so dass die Schutzkappe 3 einfach von der Kupplungskugel 1 abgenommen werden kann (vgl. hierzu Fig.2 und 3). Statt Eingriffsnuten 14 vorzusehen, ist es möglich, die Rastnasen 11, 12 von außen nach innen zu drücken und auf diese Weise aus den Rastausnehmungen 10,13 auszurasten, wonach die Halbschalen 4, 5 dann ebenfalls ihre aufgespreizte Lage selbsttätig einnehmen.

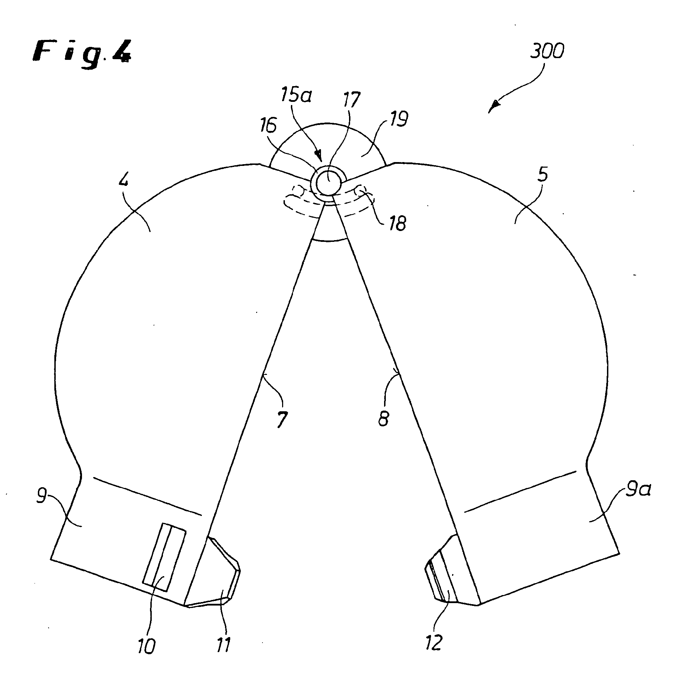

Die Fig. 4 zeigt eine alternative Gelenkverbindung der beiden Halbschalen 4, 5 einer Schutzkappe 300, bei der ein Gelenk 15a aus an den Halbschalen 4, 5 angeformten Scharnieraugen 16 und eine diese miteinander verbindenden Steckachse 17 besteht. Um das Gelenk 15a der Halbschalen 4, 5 ist im oberen Scharnierbereich ein elastisches Element, beispielsweise ein O-förmiges Gummiband 18, gelegt das bewirkt, dass die beiden Halbschalen 4, 5 sowohl in ihrer Ruhe- als auch in Ihrer Gebrauchslage zusammengezogen sind und ihre Stirnflächen 7, 8 unter dem von dem elastischen Element 18 aufgebrachten Druck bündig anliegen.

Zum Aufstülpen der Schutzkappe 300 wird diese mit dem umlaufenden Kragen 9a auf die Kupplungskugel 1 gedrückt, wobei die Halbschalen 4, 5 von der Kupplungskugel 1 aufgespreizt werden. Nach dem vollständigen Abgleiten auf der Kupplungskugel 1 wird die Schutzkappe 300 durch das O-förmige Gummiband 18 in die kugelförmige, die Kupplungskugel 1 und die Kugelstange 2 formschlüssig umgreifende, enge Gebrauchslage zusammengezogen.

Um die Schutzkappe 300 von der Kupplungskugel 1 abzuziehen, kann diese mittels am Scharnier 15a vorgesehenen Griffelementen 19 nach oben hin von der Kupplungskugel 1 abgezogen werden, wobei auch hier die Halbschalen 4, 5 über ihre Kragen 9a von der Kupplungskugel 1 abgespreizt und nach dem vollständigen Abheben von der Kupplungskugel 1 von dem O-förmigen Gummiband 18 wieder in ihre Ruhelage zusammengezogen werden.

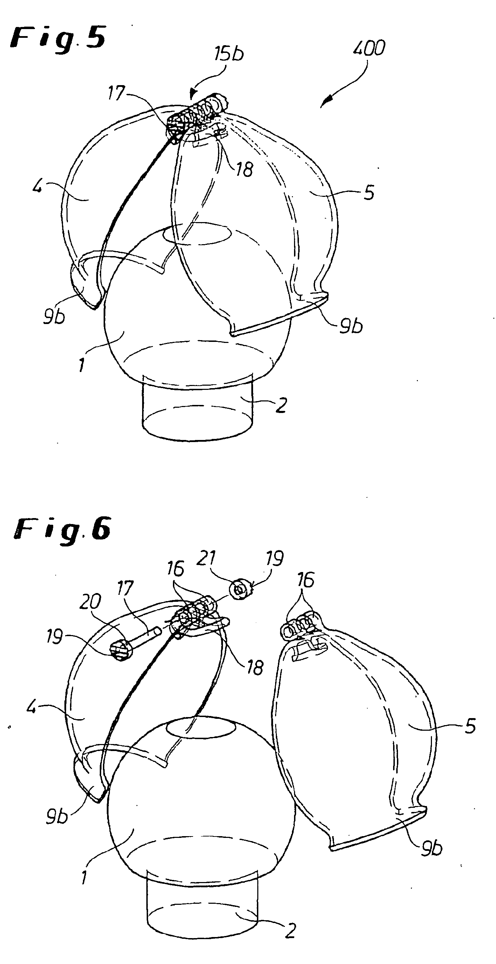

Die Ausführung einer in den Fig. 5 und 6 gezeigten Schutzkappe 400 stimmt hinsichtlich ihres Aufbaus weitestgehend und in ihrer Funktion völlig mit der Schutzkappe 300 nach Fig. 4 überein, so dass gleiche Bauteile mit denselben Bezugsziffern bezeichnet sind, auch wenn sie nicht noch einmal beschrieben werden. Abweichend ist hier der Kragen, der nicht mehr als ein die Kugelstange 2 umschließender Stehkragen, sondern als ein die Kupplungskugel 2 hinter- bzw. untergreifender Radialkragen 9b ausgebildet ist. Auf Verriegelungsmittel kann verzichtet werden. Die Griffelemente 19 befinden sich, ausgebildet als Riffelungen, an den Stirnenden der Steckachse 17, und zwar einerseits an einem Steckachsenkopf 20 und andererseits einer auf die Steckachse 17 aufschraubbaren Mutter 21.

## Patentansprüche

1. Schutzkappe (3) für eine Kupplungskugel (1), die an einer Kugelstange (2) einer Anhängevorrichtung angeordnet ist,
**dadurch gekennzeichnet,**
**dass** sie aus zwei der Kontur der Kupplungskugel (1) angepassten Halbschalen (4, 5) besteht, die im oberen, der Kugelstange gegenüberliegenden Bereich über ein aufspreizbares Gelenk (6; 15a, 15b) miteinander verbunden sind.

2. Schutzkappe nach Anspruch 1,
**dadurch gekennzeichnet,**
**daß** die Halbschalen (4, 5) an ihren freien Enden mit Verriegelungsmitteln (10, 11; 12,13) ausgebildet sind.

3. Schutzkappe nach Anspruch 1 oder 2,
**dadurch gekennzeichnet,**
**dass** am unteren Ende der Halbschalen (4, 5) ein umlaufender, zylindrischer Kragen (9a, 9b) angeformt ist.

4. Schutzkappe nach einem der Ansprüche 1 bis 3,
**dadurch gekennzeichnet,**
**dass** das Gelenk als Filmscharnier (6) ausgebildet ist.

5. Schutzkappe nach einem der Ansprüche 1 bis 3,
**dadurch gekennzeichnet,**
**dass** das Gelenk (15a, 15b) aus Scharnieraugen (16) der Halbschalen (4,5) und einer diese miteinander verbindenden Steckachse (17) besteht.

6. Schutzkappe nach Anspruch 5,
**dadurch gekennzeichnet,**
**dass** das Gelenk (15) Griffelemente (19) aufweist.

7. Schutzkappe nach Anspruch 5 oder 6,
**dadurch gekennzeichnet,**
**dass** den Halbschalen (4, 5) im Bereich des Gelenks (15a, 15b) ein elastisches Element (18) zugeordnet ist.

8. Schutzkappe nach einem der Ansprüche 1 bis 7,
**dadurch gekennzeichnet,**
**dass** eine Halbschale (4) im unteren Kragenbereich an ihren jeweils äußeren Endpunkten einerseits mit einer Rastausnehmung (10) und andererseits mit einer Rastnase (11) ausgebildet ist, denen im Kragenbereich der gegenüberliegenden Halbschale (5) eine entsprechende Rastnase (12) und eine Rastausnehmung (13) zugeordnet ist.

9. Schutzkappe nach einem der Ansprüche 1 bis 8,
**dadurch gekennzeichnet,**
**dass** in dem umlaufenden Kragen (9) Eingriffsnuten (14) zum Öffnen der Halbschalen (4,5) vorgesehen sind.

## Claims

1. A protective cap (3) for a coupling ball (1), which is disposed on a coupling rod (2) of an attachment device,
**characterised in that**
it comprises two half shells (4, 5) which are adapted to the contour of the coupling ball (1) and which are connected to one another in the upper region lying opposite to the ball rod by means of a link (6; 15a, 15b) which can be splayed open.

2. The protective cap according to claim 1,
**characterised in that**
the two half shells (4, 5) are designed with locking means of (10, 11; 12, 13) at their free ends.

3. The protective cap according to claim 1 or 2,
**characterised in that**
a circumferential, cylindrical collar (9a, 9b) is formed at the lower end of the half shells (4, 5).

4. The protective cap according to any one of claims 1 to 3,
**characterised in that**
the link is designed as a film hinge (6).

5. The protective cap according to any one of claims 1 to 3,
**characterised in that**
the link (15a, 15b) comprises hinge eyelets (16) of the half shells (4, 5) and a knockout spindle (17) connecting the latter to one another.

6. The protective cap according to claim 5,
**characterised in that**
the link (15) comprises grip elements (19).

7. The protective cap according to claim 5 or 6,
**characterised in that**
an elastic element (18) is assigned to the half shells (4, 5) in the region of the link (15a, 15b).

8. The protective cap according to any one of claims 1 to 7,
**characterised in that**
a half shell (4) is designed in the lower collar region at its respective outer end points on the one hand with a snap-in recess (10) and on the other hand with a snap-in nose (11), to which a corresponding snap-in nose (12) and a snap-in recess (13) are assigned in the collar region of the half shell (5) lying opposite.

9. The protective cap according to any one of claims 1 to 8,
**characterised in that**
engagement grooves (14) for opening of the half shells (4, 5) are provided in the circumferential collar (9).

## Revendications

1. Calotte de protection (3) pour une boule d'attelage (1) qui est disposée sur une barre avec une boule (2) d'un dispositif d'attelage,
**caractérisée en ce qu'**elle consiste en deux demi-coques (4, 5) adaptées au contour de la boule d'attelage (1), qui dans la zone supérieure sont reliées entre elles par l'intermédiaire d'une articulation (6 ; 15a, 15b) susceptible de s'écarter.

2. Calotte de protection selon la revendication 1, **caractérisée en ce que** les demi-coques (4, 5) sont conçues sur leurs extrémités libres avec des moyens de verrouillage (10, 11 ; 12, 13).

3. Calotte de protection selon la revendication 1 ou 2, **caractérisée en ce que** sur l'extrémité inférieure des demi-coques (4, 5), une collerette cylindrique périphérique (9a, 9b) est formée par moulage.

4. Calotte de protection selon l'une quelconque des revendications 1 à 3, **caractérisée en ce que** l'articulation est conçue sous la forme d'une charnière pelliculaire (6).

5. Calotte de protection selon l'une quelconque des revendications 1 à 3, **caractérisée en ce que** l'articulation (15a, 15b) consiste en des yeux de charnière (16) des demi-coques (4, 5) et en un axe enfichable (17) reliant ces derniers.

6. Calotte de protection selon la revendication 5, **caractérisée en ce que** l'articulation (15) comporte des éléments de préhension (19).

7. Calotte de protection selon la revendication 5 ou 6, **caractérisée en ce que** dans la zone de l'articulation (15a, 15b), un élément élastique (18) est associé aux demi-coques (4, 5).

8. Calotte de protection selon l'une quelconque des revendications 1 à 7, **caractérisée en ce que**, une demi-coque est conçue dans la zone inférieure de la collerette, sur ses points d'extrémité respectivement extérieurs avec un creux d'enclenchement (10) et d'autre part avec un tenon d'enclenchement (11) auxquels dans la zone de la collerette de la demi-coque opposée (5) est associé un tenon d'enclenchement (12) et un creux d'enclenchement (13).

9. Calotte de protection selon l'une quelconque des revendications 1 à 8, **caractérisée en ce que** dans la collerette périphérique (9) sont prévues des rainures d'engrènement (14) pour l'ouverture des demi-coques (4, 5).
